# EUROPEAN PATENT SPECIFICATION

(11) **EP 3 052 389 B1**
(45) Date of publication and mention of the grant of the patent: **22.08.2018**
(21) Application number: 14847113.9
(22) Date of filing: 30.09.2014
(51) Int. Cl.: B65B 55/00, B65B 25/00, B65B 25/22

(54) **FOOD PACKAGE**
LEBENSMITTELVERPACKUNG
EMBALLAGE POUR ALIMENTS

(30) Priority: 30.09.2013 US 201361884700 P
(43) Date of publication of application: 10.08.2016
(73) Proprietor: Lebovich, Lenny, Chicago, IL 60642 (US)
(72) Inventor: Lebovich, Lenny, Chicago, IL 60642 (US)
(74) Representative: Harris, Oliver John Richard
(86) International application number: PCT/US2014/058233
(87) International publication number: WO 2015/048715

(56) References cited:
- US-A- 3 029 149
- US-A- 3 061 091
- US-A- 3 112 827
- US-A- 3 946 869
- US-A- 3 946 869
- US-A- 4 552 789
- US-A- 5 326 577
- US-A- 6 053 320
- US-A1- 2007 048 421

## Description

### BACKGROUND

### 1. Technical Field

Embodiments of the invention are directed to packaging, and more particularly to food packaging that enables complete visibility of packaging contents while allowing for robust labeling of the package.

### 2. Background Information

Currently, fresh meat as bought in the meat case is packaged in either Styrofoam trays with plastic wrap, modified atmosphere packaging, or vacuum film packaging. Styrofoam trays are not transparent and limit the visibility of the product. Modified atmosphere packaging may be clear, but is not transparent (i.e. one cannot see through the material). Vacuum film packaging may clear, but any communication information such as labeling that is added to the package obscures the contents of the package. None of the current techniques for packaging meat allow the consumer to examine the cut of meat from all sides whilst also allowing for display of written information about the brand/product.

Thus, conventional packaging (including those disclosed by US 6 053 320 A or US 3 061 091 A) has various shortcomings that are undesirable for the consumer-none allow examination of the product, e.g. meat cut from all sides, meaning poor quality parts of the meat are often obscured on the back side of the package or under information areas (e.g. fatty areas, gristle, greying areas, excess blood). If unpackaged (per the butcher case), it lacks any attached information on that brand or product.

It would be beneficial to have packaging that enable a consumer to visually examine the packaged contents by having a totally transparent package around the product, e.g. meat piece, enabling complete visibility of the contents, while enabling full brand and product information to be displayed without obscuring the packaged contents. A consumer would then have all the necessary information to choose the best brand and product for them, without having to open the package whilst still displayed at the retail shelf.

### BRIEF SUMMARY

In one aspect, a package assembly is disclosed. In one embodiement, the package assembly is for food. The food package assembly includes a backer card and a transparent film. The transparent film is disposed with at least a portion adjacent the backer card, the transparent film having a front side, a back side that faces the backer card opposite the front side, and a cavity disposed between the front side and the back side. The transparent film is attached to the backer card at an attachment location disposed only above the cavity, enabling a portion of transparent film below the attachment location to move away from the backer card, and, the cavity does not extend laterally beyond the backer card.

In some embodiments, the backer card has header and base portions, with the portion of the transparent film attached to the backer card disposed between the header and base portions. In some embodiments, the backer card's base portion has front and rear sections, with the front section facing the transparent film and the rear section facing away from the transparent film. In some embodiments, the front and rear sections each have information printed on a single side of the backer card, with the back section folded behind the front section, exposing the single side of the backer card in the front and back sections.

In some embodiments, the back side of the transparent film is flat, and the cavity is sized and shaped to hold a food item. In some embodiments, a food item is disposed in the cavity. In some embodiments, the cavity is evacuated, and the front side of the transparent film complements a shape of the food item. In some embodiments, information is printed on the front section between the base portion and the back side of the transparent film. In some embodiments, the header portion, front section, and rear section are a single unit having a first fold separating the header portion and the rear section, and a second fold separating the front section and the rear section, with the header portion, front section, and rear section being printed on a single side of material comprising the backer card. In some embodiments, the transparent film is secured to the backer card by a fastener selected from the group consisting of adhesives, staples, rivets, stitching, and/or other methods. In some embodiments, the transparent film is removably attached to the backer card at a second location between the cavity and the backer card, thereby stabilizing the transparent film in place laterally while enabling the peeling of the transparent film from the backer card at the second location.

In another aspect, a method for packaging an item is disclosed. In some embodiments, the item is food and includes sealing a food item in a transparent film, printing information relevant to the food item on a front of a backer card, and securing an upper portion of the transparent film to an upper portion of the backer card. The transparent film has a first side with a first transparent portion and a second side with a second transparent portion. In some embodiments, the transparent film below the upper portion of the transparent film is free to move relative to the backer card, and the transparent film is located entirely within the front of the backer card covering the information on the front of the backer card.

In some embodiments, the backer card is folded into a header with front and rear portions thereby securing the upper portion of the transparent film to an upper portion of the backer card including securing the upper portion of the transparent film between the front and header portions. In some embodiments, a portion of the information relevant to the food item is not covered by the transparent film. In some embodiments, sealing the food item in a transparent film includes inserting the food item between the first side and second side, removing air from between the first and second sides, and sealing a perimeter of the first side to the second side. In some embodiments, printing information occurs prior to folding the backer card, and the backer card is printed on a single side. In some embodiments, a portion of the transparent film is adhered below the upper portion to the backer card with a removable fastener.

In another aspect, a method of displaying an item is disclosed. In some embodiments, the item is food and includes sealing a food item in a transparent film having a first side having a first transparent portion and a second side having a second transparent portion, securing an upper portion of the transparent film to an upper portion of a backer card, leaving the transparent film below the upper portion of the transparent film free to move relative to the backer card, the transparent film being located entirely within the front of the backer card and covering a portion of printed information on the front of the backer card, and suspending the backer card from the upper portion of the backer card.

In some embodiments, a header portion of the backer card is folded forward, and the upper portion of the transparent film is secured between the backer card and the header portion of the backer card. In some embodiments, the transparent film has a perimeter portion around the food item and between the first and second sides, and the perimeter portion is transparent.

### BRIEF DESCRIPTION OF THE DRAWINGS

FIG. 1 illustrates a view of an embodiment of a package assembly in accordance with an embodiment of the invention.
FIG. 2 illustrates a backer card from the embodiment shown in FIG. 1.
FIG. 3 illustrates the backer card of FIG. 2 and a transparent film surrounding a food product.
FIG. 4 illustrates the backer card and transparent film of FIG. 3 with the transparent film being positioned on the backer card.
FIG. 5 illustrates the backer card and transparent film of FIG. 3 with the transparent film being secured to the backer card.
FIG. 5A is a cross-sectional view of the backer card and transparent film of FIG. 5.
FIG. 6 illustrates a food product within the transparent film being secured to a backer card.
FIG. 7 illustrates an alternative embodiment of a package assembly.

### DETAILED DESCRIPTION

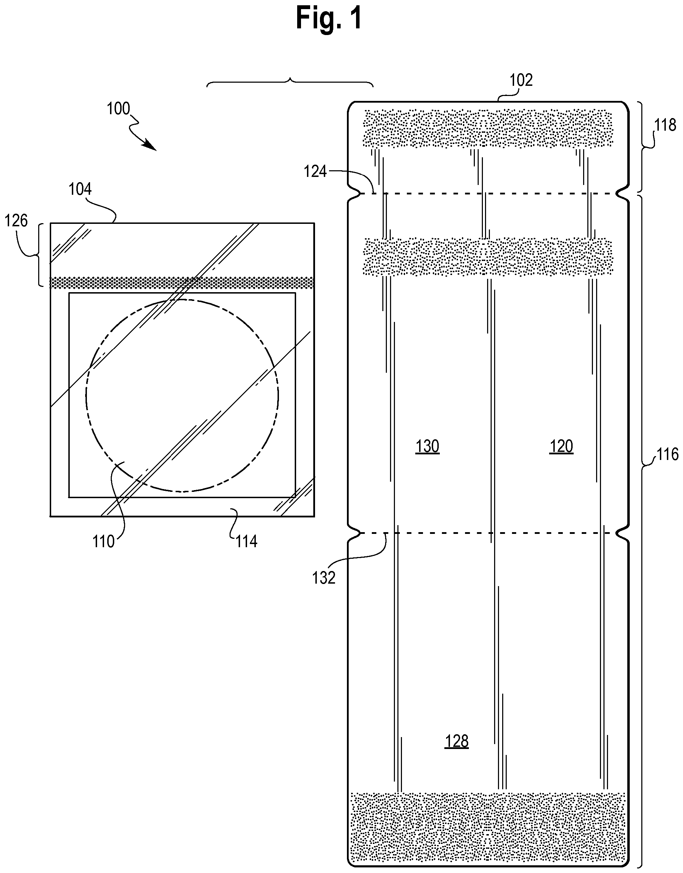

FIG. 1 illustrates an embodiment of an unassembled food package 100 that enables an unobscured view into the package 100 while allowing for printed information to be displayed without obscuring the package contents. The food package 100 is generally formed of a backer card 102 shown on the right hand side of the drawing, and a transparent film 104 shown on the left hand side of the drawing. Throughout this description and the accompanying claims, the use of the terms upper, lower, above, and below refer to the orientation as shown in the figures. The packaging may be rotated such that a top of the backer card shown would lie to the left or right. The backer card 102 may be cardboard, plastic, or other semi-rigid material sturdy enough to support the package contents as is generally known in the food industry. The transparent film 104 may be a vacuum pack film such as cast nylon, cast polypropylene, or other types of transparent film, including multi-layer films as known in the industry.

The transparent film 104 has a front side 106 and a back side 108 opposite the front side 106. A cavity 110 is disposed between the front side 106 of the transparent film 104 and the back side 108. A food product 112 may be packaged within the cavity 110. The front side 106 and the back side 108 of the transparent film 104 may be sealed to one another along a perimeter of the cavity 110. The seal 114 between the back 108 and front side 106 of the transparent film 104 may be airtight, and the cavity 110 may be vacuum packed. In some embodiments, air within the cavity 110 may be replaced with a gas mixture such as a mix of oxygen, nitrogen, and carbon monoxide. The transparent film 104 may extend above the cavity 110 further than it extends toward the sides or below the cavity 110. In some embodiments, the back side 108 of the transparent film 104 may be flat, such that it may lie flush against a flat surface such as the backer card 102. In other embodiments, the back side 108 of the transparent film 104 may be shaped to complement the product packaged in the cavity 110. For example, if the product were spherical, the back side 108 of the transparent film 104 may have a hemispherical shape.

The front side 106 of the transparent film 104 may generally complement a shape of the product packaged in the cavity 110. In some embodiments in which the back side 108 of the transparent film 104 is flat, the front side 106 of the transparent film 104 may extend away from the back side 108 in the shape of the package contents to provide space for the cavity 110.

The backer card 102 provides a surface for securing the transparent film 104 and a surface for printing information regarding the product. In the embodiment of FIG. 1, the backer card 102 is divided into a base portion 116 and a header portion 118. The side of the backer card 102 that is visible in FIG. 1 will be referred to as the inner side 120, and the side of the backer card 102 opposite the inner side 120 will be referred to as the outer side 122. When the backer card 102 is folded, as will be explained hereafter, the inner side 120 faces inward and is not be visible, while the outer side 122 faces outward and is visible. Information printed on the inner side 120 would not be visible to a consumer inspecting the package 100, while information printed on the outer side 122 would be visible to a consumer inspecting the package 100.

The header portion 118 may have a fold line 124 at which the header portion 118 may be folded, over the base portion 116 such that the inner side 120 of the header portion 118 faces the inner side 120 of the base portion 116. As will be explained below, an upper portion 126 of the transparent film 104 may extend between the header portion 118 and the base portion 116, and be secured between the two portions. The base portion 116 may be further divided into a front section 128 and a rear section 130, divided by a fold line 132.

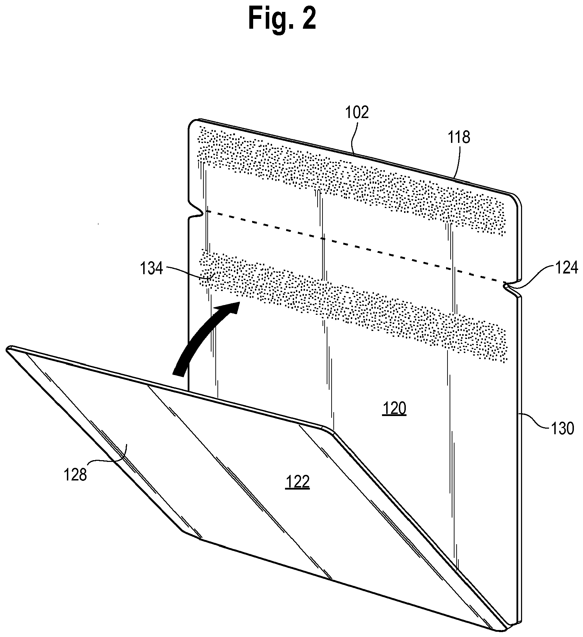

FIG. 2 illustrates the backer card 102 with the front section 128 being folded over the rear section 130 at the fold line 124 such that the inner side 120 of the front section 128 faces the inner side 120 of the rear section 130. An adhesive may adhere the inner side 120 of the front section 128 to the inner side 120 of the rear section 130. The adhesive may be applied in a strip 134 as shown in FIG. 2, or it may be applied over a larger area between the two sections. When the rear section 130 of the backer card 102 is folded over the front section 128, information printed on the outside surface 122 of the front section 128 will appear on the front of the package assembly 100, while information printed on the outside surface 122 of the rear section 130 will appear on a rear surface of the package assembly 100.

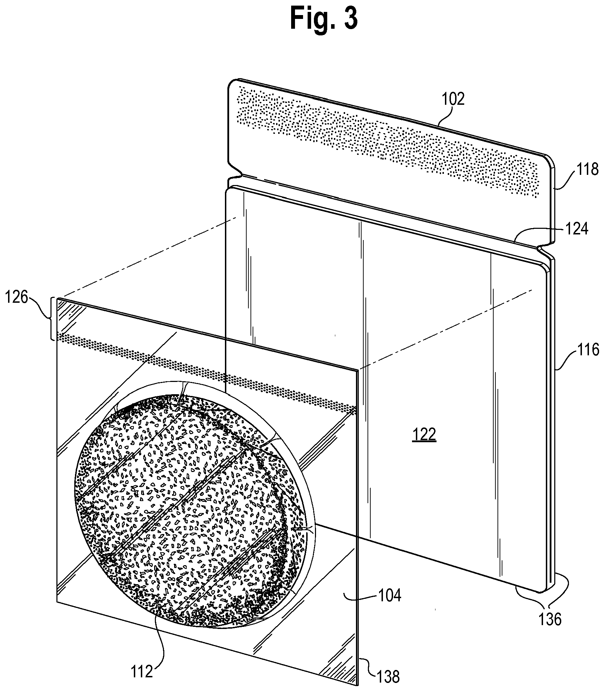

In FIG. 3, the transparent film 104 housing a food item 112 in its cavity 110 is shown being placed over the backer card 102 such that the back side 108 faces the outer surface 122 of the front section 128 of the backer card 102. The cavity 110 and the backer card 102 are each sized to ensure that the cavity 110 does not extend past the edges 136 of the backer card 102. The outer edges 138 of the transparent film 104 may be sized to align with the outer edge 136 of the backer card 102.

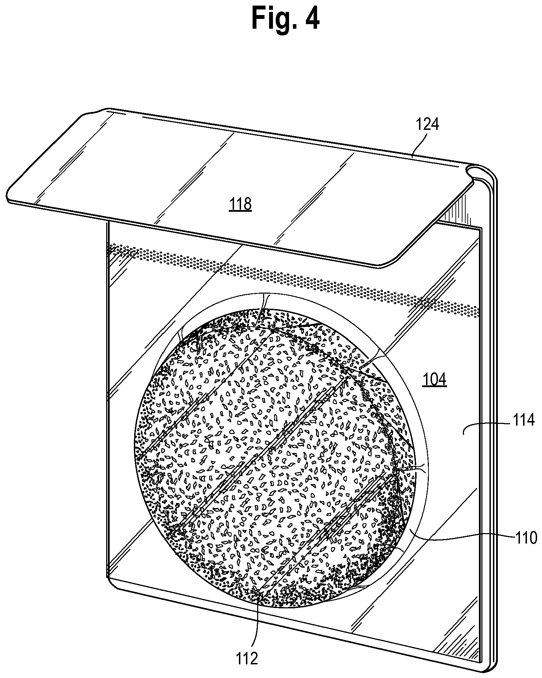

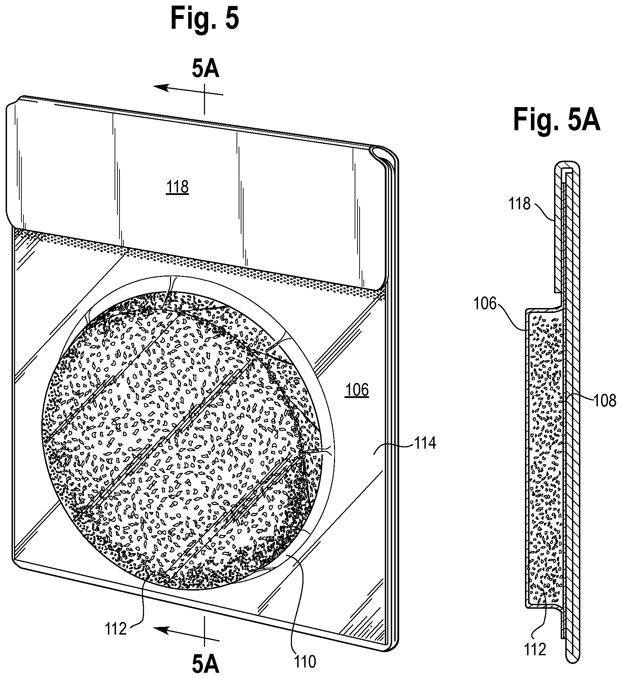

In FIG. 4, the transparent film 104 is shown in place against the backer card 102. The header portion 118 of the backer card 102 is shown being folded forward with the upper portion 126 of the transparent film 104 being disposed between the base portion 116 and the header portion 118. FIG. 5 illustrates the header portion 118 being folded completely with the transparent film 104 being secured to the backer card 102. The header portion 118 may secured to the transparent film 104 and the transparent film 104 to the base portion 116, securing the transparent film 104 in place. FIG. 5a illustrates a cross section of the package 100 illustrating the folded backer card 102 and its relation to the transparent film 104.

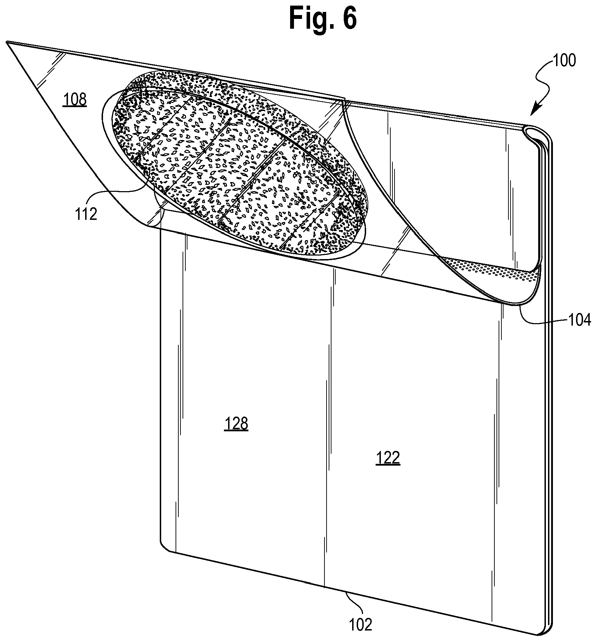

As shown in FIG. 6, the transparent film 104 is secured to the backer card 102 at a location only above the cavity 110, allowing the transparent film 104 below the cavity 110 to move away from the backer card 102. When the cavity 110 is moved away from the backer card 102, a consumer may inspect the contents of the cavity 110 from the back side 108 as well as the front side 106. The backer card 102 may be printed with product information such as nutrition information, product identification, product branding, and other information. Because the entire outside 122 of the backer card 102 may be printed without regard for allowing visibility of the product, it may be possible to include more information than in a traditional package. Furthermore, in some embodiments, the contents of the cavity 110 may obscure a portion of the backer card 102, such that it may only be observed by moving the transparent film 104 away from the backer card 102. This encourages interaction by the consumer to physically move the transparent film 104 to observe additional information.

Also shown in FIG. 6 is a temporary adhesive 140 that temporarily adheres the transparent film 104 below the secured portion to the backer card 102. The temporary adhesive may inhibit the transparent film 104 from shearing relative to the backer card 102, but still allow the transparent film 104 to be pulled away from the backer card 102. The temporary adhesive may comprise a material such as low tack adhesive, fugitive adhesive, pressure sensitive adhesive, or other suitable adhesives as known in the art.

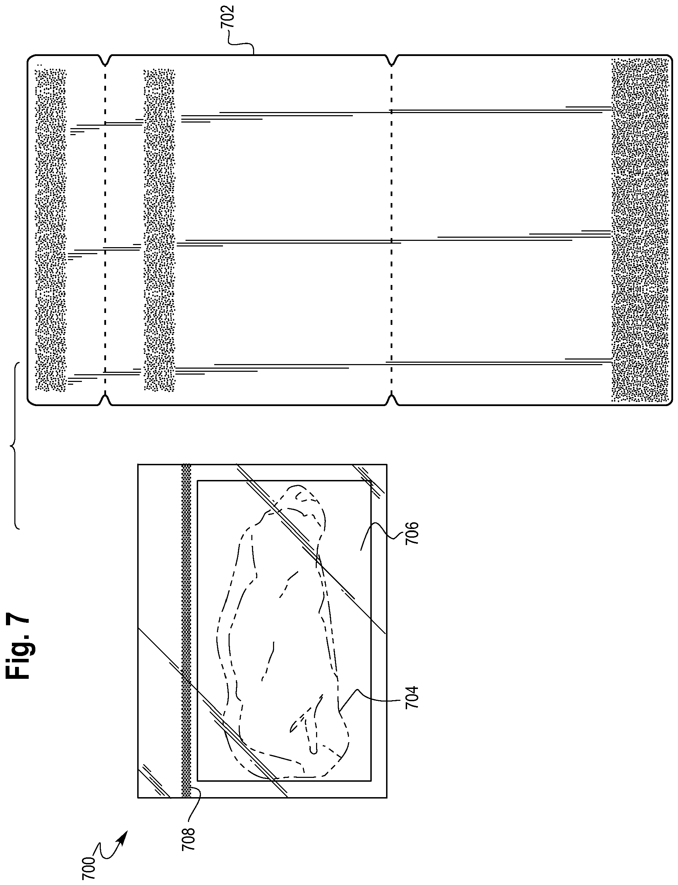

FIG. 7 illustrates another embodiment of a food package 700. The embodiment of FIG. 7 is similar to the previously described embodiment and like elements will not be described in further detail. In FIG. 7, the backer card 702 is rectangle in shape to allow for a different shape of food item. Additionally, in FIG. 7 the food item 704 in the cavity is irregular in shape and the seal 706 between the front side of the transparent film and the backside is generally rectangular, rather than conforming to the shape of the food item 704. According to the invention, the transparent film has a perforation 708 between the cavity and the upper portion secured to the backer card 702. The transparent film may be torn at the perforation 708 removing the food item 704 from the backer card, while maintaining the package seal 706. Additionally, the seal 706 between the front side and the back side of the film is removable, such that the front side may be peeled away from the back side to remove the food item.

In another aspect, methods for packaging items, such as food items in a package consistent with the previously described packaging. A food item, such as a cut of meat, is sealed within the transparent film 104 between the front side 106 and the back side 108. The transparent film 104 has at least a transparent portion on the front side and a transparent portion on the back side, enabling viewing of the front and back of the food item. Preferably, the transparent film 104 is completely transparent allowing an unobscured view of the food item. Information relevant to the food item is printed on the front of the backer card 102. For example, information such as nutritional information, branding information, source information, or other consumer information is printed on the front of the backer card 102.

An upper portion of the transparent film 104 is secured to backer card 102, leaving the transparent film 104 below the upper portion of the transparent film 104 free to move relative to the backer card 102. The transparent film 104 is located entirely within the front of the backer card 102 and covers the information printed on the front of the backer card 102. The information is obscured by the contents of the package when the transparent film 104 is in place against the backer card 102, but may be viewed by moving the transparent film 104 away from the backer card 102. The transparent film 104 may be moved away by a consumer while the packaging remains sealed and on the shelf. A portion of the information relevant to the package may be unobscured by the transparent film 104, such that a consumer may read it without having to move the contents. The unobscured information may serve as a prompt, indicating to a potential purchaser that further information is available behind the package contents.

The backer card 102 may be folded into the header portion 118, front section 128, and rear section 130. The upper portion of the transparent film 104 may then be secured to the backer card 102 by securing the upper portion of the transparent film 104 between front section 128 and the header portion 118. For example, the upper portion of the transparent film 104 may be stapled between the header portion 118 and the front section 128 of the backer card 102. The backer card 102 may be printed with information prior to folding. The information may be printed on a single side of the backer card 102 that is then displayed on the outside of the backer card 102 once folded.

The food item may be sealed in the transparent film 104 by inserting the food item between the front side 106 and back side 108, removing air from between the front side 106 and back side 108, and sealing a perimeter of the front side to the back side. The air may be replaced by an alternative atmosphere for preserving the contents, for example nitrogen.

In another aspect, a method of displaying items is disclosed such as food items. A food item is sealed in a transparent film 104 and an upper portion of the transparent film 104 is secured to an upper portion of a backer card 102, leaving the transparent film 104 below the upper portion of the transparent film 104 free to move relative to the backer card 102. The transparent film 104 is located entirely within the front of the backer card 102 and covers a portion of printed information on the front of the backer card 102. The backer card 102 is then suspended from the upper portion of the backer card 102. A header portion 118 of the backer card 102 may be folded forward and the upper portion of the transparent film 104 may be secured between the backer card 102 and the header portion 118 of the backer card 102.

Although the invention has been described with reference to the accompanying sheets of drawings and the embodiments disclosed thereon, the invention is not limited to the described embodiments. For example, while the backer card 102 is shown as a double folded card, a backer card 102 could have more or less folds or even no folds. Additionally, while the food package is described in an upright configuration with the film 104 attached to the backer card 102 above the cavity 106, the use of the terms upper, lower, side, above, and below are used only as a directional reference relative to the food package 100 as shown. Embodiments are not limited to the upright configuration and the food package 100 could be rotated ninety degrees with the attachment to the side of the food package 100. For example, in embodiments in which the package 100 was rotated clockwise 90 degrees, upper and above would refer to the right, and lower and below would refer to the left. Further modifications may be made while the scope of the invention is defined by the appended claims.

## Claims

1. A food package assembly (100), comprising:
a backer card (102);
a transparent film (104) disposed with at least a portion adjacent the backer card (102), the transparent film (104) having a front side (106), a back side (108) that faces the backer card (102) opposite the front side (106), and a cavity (110) disposed between the front and back sides (106,108); and
a food item (112) disposed in the cavity (110);
**characterized in that**
the transparent film (104) is attached to the backer card (102) at an attachment location disposed only above the cavity (110), enabling a portion of transparent film below the attachment location to move away from the backer card (102); and wherein the cavity (110) does not extend laterally beyond the backer card (102);
and wherein the transparent film (104) has:
a perforation (708) located between the cavity (110) and an upper portion (126) of the transparent film (104); and
a seal (114) between the front side (106) and the back side (108) of the film such (104) that the front side (106) may be peeled away from the back side (108).

2. The assembly of claim 1, wherein the backer card (102) comprises header and base portions (118,116), wherein the portion of the transparent film (104) attached to the backer card (102) is disposed between the header and base portions (118,116).

3. The assembly of claim 2, wherein the backer card's base portion (116) comprises front and rear sections (128,130), wherein the front section (128) faces the transparent film (104), and the rear section (130) faces away from the transparent film (104).

4. The assembly of claim 3, wherein:
a. the front and rear sections (128,130) each have information printed on a single side of the backer card (102), wherein the back section (130) is folded behind the front section (128) exposing the single side of the backer card (102) in the front and rear sections (128,130);
b. information is printed on the front section (128) between the base portion (116) and the back side of the transparent film (104); or
c. the header portion (118), front section (128), and rear section (130), are a single unit having a first fold (124) separating the header portion (118) and the rear section (130), and a second fold (132) separating the front section (128) and the rear section (130), wherein the header portion (118), front section (128), and rear section (130) are printed on a single side of material comprising the backer card (102).

5. The assembly of claim 1, wherein the food item (112) is unobscured by any markings on the transparent film (104).

6. The assembly of claim 1, wherein the cavity (110) is evacuated and the front side (106) of the transparent film (104) complements a shape of the food item (112).

7. The assembly of claim 1, wherein the transparent film (104) is:
a. secured to the backer card (102) by a fastener selected from the group consisting of: adhesives, staples, rivets, and stitching; or
b. removably attached to the backer card (102) at a second location between the cavity (110) and the backer card (102) stabilizing the transparent film (104) in place laterally while enabling the transparent film (104) peeled from the backer card (102) at the second location.

8. A method for packaging a food item comprising:
sealing a food item (112) between front and back sides (106,108) of a transparent film (104) forming a cavity (110) such that the front side (106) may be peeled away from the back side (108);
printing information relevant to the food item (112) on a front (106) of a backer card (102);
securing an upper portion (126) of the transparent film (104) to the backer card (102), leaving the transparent film (104) below the upper portion (126) of the transparent film (104) free to move relative to the backer card (102), the transparent film (104) being located entirely within the front (106) of the backer card (102) and covering the information on the front (106) of the backer card (102); and
perforating the transparent film (104) between the cavity (110) and the upper portion (126) of the transparent film (104).

9. The method of claim 8, further comprising folding the backer card (102) into a header portion (118), front section (128), and rear section (130), wherein securing the upper portion (126) of the transparent film (104) to the backer card (102) comprises securing the upper portion (126) of the transparent film (104) between the header portion (118) and the front section (128).

10. The method of claim 8, wherein a portion of the information relevant to the food item (112) is not covered by the transparent film (104).

11. The method of claim 10, wherein sealing the food item (112) in a transparent film (104) comprises inserting the food item (112) between the front and back sides (106,108); removing air from between the front and back sides (106,108); and sealing a perimeter of the front side (106) to the back side (108).

12. The method of claim 9, wherein printing information occurs prior to folding the backer card (102) and wherein the backer card (102) is printed on a single side.

13. The method of claim 8, further comprising adhering a portion of the transparent film (104) below the upper portion (126) to the backer card (102) with a removable fastener.

14. A method of displaying food, comprising:
sealing a food item (112) between front and back sides (106,108) of a transparent film (104) forming a cavity (110) such that the front side (106) may be peeled away from the back side (108);
securing an upper portion (126) of the transparent film (104) to an upper portion of a backer card (102), leaving the transparent film (104) below the upper portion (126) of the transparent film (104) free to move relative to the backer card 102), the transparent film (104) being located entirely within the front of the backer card (102) and covering a portion of printed information on the front of the backer card (102);
perforating the transparent film (104) between the cavity (110) and the upper portion (126) of the transparent film (104); and
suspending the backer card (102) from the upper portion of the backer card (102).

15. The method of claim 14:
a. further comprising folding a header portion (118) of the backer card (102) forward and wherein the upper portion (126) of the transparent film (104) is secured between the backer card (102) and the header portion (118) of the backer card (102); or
b. wherein the transparent film (104) has a perimeter portion around the food item (112) and between the front and back sides (106,108), wherein the perimeter portion is transparent.

## Patentansprüche

1. Nahrungsmittelverpackungsanordnung (100), aufweisend:
eine Trägerkarte (102);
eine durchsichtige Folie (104), angeordnet mit mindestens einem Abschnitt angrenzend an die Trägerkarte (102), wobei die durchsichtige Folie (104) eine Vorderseite (106), eine der Trägerkarte (102) gegenüber der Vorderseite (106) zugewandte Rückseite (108), und einen zwischen der Vorder- und Rückseite (106, 108) angeordneten Hohlraum (110) aufweist; und
ein Nahrungsmittel (112), das im Hohlraum (110) angeordnet ist;
**dadurch gekennzeichnet, dass**
die durchsichtige Folie (104) an der Trägerkarte (102) an einer Anbringungsstelle angebracht ist, die nur oberhalb des Hohlraums (110) angeordnet ist, wodurch ein Abschnitt der durchsichtigen Folie unterhalb der Anbringungsstelle sich von der Trägerkarte (102) weg bewegen kann; und wobei sich der Hohlraum (110) nicht seitlich hinter der Trägerkarte (102) erstreckt;
und wobei die durchsichtige Folie (104) aufweist:
eine Perforation (708), angeordnet zwischen dem Hohlraum (110) und einem oberen Abschnitt (126) der durchsichtigen Folie (104); und
eine Dichtung (114) zwischen der Vorderseite (106) und der Rückseite (108) der Folie (104), so dass die Vorderseite (106) von der Rückseite (108) abgezogen werden kann.

2. Anordnung nach Anspruch 1, wobei die Trägerkarte (102) Kopf- und Basisabschnitte (118, 116) aufweist, wobei der Abschnitt der an der Trägerkarte (102) angebrachten durchsichtigen Folie (104) zwischen den Kopf- und Basisabschnitten (118, 116) angeordnet ist.

3. Anordnung nach Anspruch 2, wobei der Basisabschnitt (116) der Trägerkarte vordere und hintere Abschnitte (128, 130) aufweist, wobei der vordere Abschnitt (128) der durchsichtigen Folie (104) zugewandt ist, und der hintere Abschnitt (130) von der durchsichtigen Folie (104) abgewandt ist.

4. Anordnung nach Anspruch 3, wobei:
a. der vordere und der hintere Abschnitt (128, 130) jeweils Informationen aufweisen, die auf einer einzigen Seite der Trägerkarte (102) gedruckt sind, wobei der hintere Abschnitt (130) hinter dem vorderen Abschnitt (128) gefaltet ist und die einzige Seite der Trägerkarte (102) im vorderen und hinteren Abschnitt (128, 130) freilegt;
b. Information auf dem vorderen Abschnitt (128) zwischen dem Basisabschnitt (116) und der Rückseite der durchsichtigen Folie (104) gedruckt ist; oder
c. der Kopfabschnitt (118), der vordere Abschnitt (128) und der hintere Abschnitt (130) eine einzige Einheit sind, die eine erste Falte (124) aufweist, die den Kopfabschnitt (118) vom hinteren Abschnitt (130) trennt, und eine zweite Falte (132), die den vorderen Abschnitt (128) vom hinteren Abschnitt trennt (130), wobei der Kopfabschnitt (118), der vordere Abschnitt (128) und der hintere Abschnitt (130) auf einer einzigen Seite von Material gedruckt sind, das die Trägerkarte (102) umfasst.

5. Anordnung nach Anspruch 1, wobei das Nahrungsmittel (112) nicht durch irgendwelche Markierungen auf der durchsichtigen Folie (104) verdeckt ist.

6. Anordnung nach Anspruch 1, wobei der Hohlraum (110) evakuiert ist und die Vorderseite (106) der durchsichtigen Folie (104) eine Form des Nahrungsmittels (112) ergänzt.

7. Anordnung nach Anspruch 1, wobei die durchsichtige Folie (104):
a. an der Trägerkarte (102) durch ein Befestigungsmittel befestigt ist, ausgewählt aus der Gruppe bestehend aus: Klebern, Klammern, Nieten und Nähten; oder
b. entfernbar an der Trägerkarte (102) an einer zweiten Stelle zwischen dem Hohlraum (110) und der Trägerkarte (102) befestigt ist, und die durchsichtige Folie (104) seitlich in ihrer Lage stabilisiert, während die durchsichtige Folie (104) an der zweiten Stelle von der Trägerkarte (102) abgezogen werden kann.

8. Verfahren zum Verpacken eines Nahrungsmittels, umfassend:
Versiegeln eines Nahrungsmittels (112) zwischen den Vorder- und Rückseiten (106, 108) einer durchsichtigen Folie (104) unter Bilden eines Hohlraums (110), so dass die Vorderseite (106) von der der Rückseite (108) abgezogen werden kann;
Drucken von für das Nahrungsmittel (112) relevanter Information auf einer Vorderseite (106) einer Trägerkarte (102);
Befestigen eines oberen Abschnitts (126) der durchsichtigen Folie (104) an der Trägerkarte (102), wobei die durchsichtige Folie (104) unterhalb des oberen Abschnitts (126) der durchsichtigen Folie (104) frei bleibt, um sich relativ zur Trägerkarte (102) zu bewegen, die durchsichtige Folie (104) vollständig innerhalb der Vorderseite (106) der Trägerkarte (102) angeordnet ist und die Information auf der Vorderseite (106) der Trägerkarte (102) bedeckt; und
Perforieren der durchsichtigen Folie (104) zwischen dem Hohlraum (110) und dem oberen Abschnitt (126) der durchsichtigen Folie (104).

9. Verfahren nach Anspruch 8, ferner umfassend Falten der Trägerkarte (102) in einen Kopfabschnitt (118), einen vorderen Abschnitt (128) und einen hinteren Abschnitt (130), wobei das Befestigen des oberen Abschnitts (126) der durchsichtigen Folie (104) an der Trägerkarte (102) das Befestigen des oberen Abschnitts (126) der durchsichtigen Folie (104) zwischen dem Kopfabschnitt (118) und dem vorderen Abschnitt (128) umfasst.

10. Verfahren nach Anspruch 8, wobei ein Abschnitt der für das Nahrungsmittel (112) relevanten Information nicht von der durchsichtigen Folie (104) bedeckt ist.

11. Verfahren nach Anspruch 10, wobei das Versiegeln eines Nahrungsmittels (112) in einer durchsichtigen Folie (104) das Einführen des Nahrungsmittels (112) zwischen den Vorder- und Rückseiten (106, 108) umfasst; Entfernen von Luft zwischen den Vorder- und Rückseiten (106, 108); und Versiegeln eines Umfangs der Vorderseite (106) mit der Rückseite (108).

12. Verfahren nach Anspruch 9, wobei das Drucken von Information vor dem Falten der Trägerkarte (102) erfolgt, und wobei die Trägerkarte (102) auf einer einzigen Seite gedruckt wird.

13. Verfahren nach Anspruch 8, ferner umfassend Anbringen eines Abschnitts der durchsichtigen Folie (104) unterhalb des oberen Abschnitts (126) an der Trägerkarte (102) mit einem entfernbaren Befestigungsmittel.

14. Verfahren zum Ausstellen von Nahrungsmitteln, umfassend:
Versiegeln eines Nahrungsmittels (112) zwischen den Vorder- und Rückseiten (106, 108) einer durchsichtigen Folie (104) unter Bilden eines Hohlraums (110), so dass die Vorderseite (106) von der der Rückseite (108) abgezogen werden kann;
Befestigen eines oberen Abschnitts (126) der durchsichtigen Folie (104) an einem oberen Abschnitt einer Trägerkarte (102), wobei sich die durchsichtige Folie (104) unterhalb des oberen Abschnitts (126) der durchsichtigen Folie (104) relativ zur Trägerkarte (102) frei bewegen kann, die durchsichtige Folie (104) vollständig innerhalb der Vorderseite der Trägerkarte (102) angeordnet ist und einen Abschnitt der gedruckten Information auf der Vorderseite der Trägerkarte (102) bedeckt;
Perforieren der durchsichtigen Folie (104) zwischen dem Hohlraum (110) und dem oberen Abschnitt (126) der durchsichtigen Folie (104); und
Einhängen der Trägerkarte (102) vom oberen Abschnitt der Trägerkarte (102) aus.

15. Verfahren nach Anspruch 14:
a. ferner umfassend Falten eines Kopfabschnitts (118) der Trägerkarte (102) nach vorn, und wobei der obere Abschnitt (126) der durchsichtigen Folie (104) zwischen der Trägerkarte (102) und dem Kopfabschnitt (118) der Trägerkarte (102) befestigt ist; oder
b. wobei die durchsichtige Folie (104) einen Umfangsabschnitt um das Nahrungsmittel (112) und zwischen den Vorder- und Rückseiten (106, 108) aufweist, wobei der Umfangsabschnitt durchsichtig ist.

## Revendications

1. Ensemble d'emballage alimentaire (100) comprenant :
une cartonnette de fond (102) ;
un film transparent (104) disposé avec au moins une partie adjacente à la cartonnette de fond (102), le film transparent (104) ayant un côté avant (106), un côté arrière (108) qui fait face à la cartonnette de fond (102) opposé au côté avant (106), et une cavité (110) disposée entre les côtés avant et arrière (106, 108) ; et
un produit alimentaire (112) disposé dans la cavité (110) ;
**caractérisé en ce que** :
le film transparent (104) est fixé à la cartonnette de fond (102) à un emplacement de fixation disposé uniquement au-dessus de la cavité (110), permettant à une partie du film transparent au-dessous de l'emplacement de fixation de s'éloigner de la cartonnette de fond (102) ; et dans lequel la cavité (110) ne s'étend pas latéralement au-delà de la cartonnette de fond (102) ;
et dans lequel le film transparent (104) comporte :
une perforation (708) positionnée entre la cavité (110) et une partie supérieure (126) du film transparent (104) ; et
un joint d'étanchéité (114) entre le côté avant (106) et le côté arrière (108) du film (104) de sorte que le côté avant (106) peut être détaché du côté arrière (108).

2. Ensemble selon la revendication 1, dans lequel la cartonnette de fond (102) comprend des parties de tête et de base (118, 116), dans lequel la partie du film transparent (104) fixée à la cartonnette de fond (102) est disposée entre les parties de tête et de base (118, 116).

3. Ensemble selon la revendication 2, dans lequel la partie de base (116) de la cartonnette de fond comprend des sections avant et arrière (128, 130), dans lequel la section avant (128) fait face au film transparent (104), et la section arrière (130) est disposée à l'opposé du film transparent (104) .

4. Ensemble selon la revendication 3, dans lequel :
a. les sections avant et arrière (128, 130) ont chacune des informations imprimées sur un seul côté de la cartonnette de fond (102), dans lequel la section arrière (130) est pliée derrière la section avant (128) exposant le seul côté de la cartonnette de fond (102) dans les sections avant et arrière (128, 130) ;
b. les informations sont imprimées sur la section avant (128) entre la partie de base (116) et le côté arrière du film transparent (104) ; ou
c. la partie de tête (118), la section avant (128) et la section arrière (130) sont une seule unité ayant un premier pli (124) séparant la partie de tête (118) et la section arrière (130), et un second pli (132) séparant la section avant (128) et la section arrière (130), dans lequel la partie de tête (118), la section avant (128) et la section arrière (130) sont imprimées sur un seul côté de matériau comprenant la cartonnette de fond (102).

5. Ensemble selon la revendication 1, dans lequel le produit alimentaire (112) n'est pas obscurci par des marques sur le film transparent (104).

6. Ensemble selon la revendication 1, dans lequel la cavité (110) est mise sous vide et le côté avant (106) du film transparent (104) complète une forme du produit alimentaire (112) .

7. Ensemble selon la revendication 1, dans lequel le film transparent (104) est :
a. fixé sur la cartonnette de fond (102) par une fixation sélectionnée dans le groupe comprenant : les adhésifs, les agrafes, les rivets et les coutures ; ou
b. fixé, de manière amovible, sur la cartonnette de fond (102) à un second emplacement entre la cavité (110) et la cartonnette de fond (102) stabilisant le film transparent (104) en place latéralement tout en permettant au film transparent (104) de se détacher de la cartonnette de fond (102) au second emplacement.

8. Procédé pour emballer un produit alimentaire comprenant les étapes suivantes :
sceller un produit alimentaire (112) entre les côtés avant et arrière (106, 108) d'un film transparent (104) formant une cavité (110) de sorte que le côté avant (106) peut être détaché du côté arrière (108) ;
imprimer les informations concernant le produit alimentaire (112) sur une partie avant (106) de la cartonnette de fond (102) ;
fixer une partie supérieure (126) du film transparent (104) sur la cartonnette de fond (102), laissant le film transparent (104) au-dessous de la partie supérieure (126) du film transparent (104) libre de se déplacer par rapport à la cartonnette de fond (102), le film transparent (104) étant positionné complètement à l'intérieur de la partie avant (106) de la cartonnette de fond (102) et recouvrant les informations sur la partie avant (106) de la cartonnette de fond (102) ; et
perforer le film transparent (104) entre la cavité (110) et la partie supérieure (126) du film transparent (104).

9. Procédé selon la revendication 8, comprenant en outre le pliage de la cartonnette de fond (102) dans une partie de tête (118), une section avant (128) et une section arrière (130), dans lequel la fixation de la partie supérieure (126) du film transparent (104) sur la cartonnette de fond (102) comprend la fixation de la partie supérieure (126) du film transparent (104) entre la partie de tête (118) et la section avant (128).

10. Procédé selon la revendication 8, dans lequel une partie des informations concernant le produit alimentaire (112) n'est pas recouverte par le film transparent (104).

11. Procédé selon la revendication 10, dans lequel le scellement du produit alimentaire (112) dans un film transparent (104) comprend l'insertion du produit alimentaire (112) entre les côtés avant et arrière (106, 108) ; le retrait de l'air d'entre les côtés avant et arrière (106, 108) ; et le scellement d'un périmètre du côté avant (106) sur le côté arrière (108).

12. Procédé selon la revendication 9, dans lequel l'impression des informations a lieu avant le pliage de la cartonnette de fond (102) et dans lequel la cartonnette de fond (102) est imprimée d'un seul côté.

13. Procédé selon la revendication 8, comprenant en outre la fixation d'une partie du film transparent (104) au-dessous de la partie supérieure (126) sur la cartonnette de fond (102) avec une fixation amovible.

14. Procédé de présentation de produit alimentaire comprenant les étapes suivantes :
sceller un produit alimentaire (112) entre les côtés avant et arrière (106, 108) d'un film transparent (104) formant une cavité (110) de sorte que le côté avant (106) peut être détaché du côté arrière (108) ;
fixer une partie supérieure (126) du film transparent (104) sur une partie supérieure de la cartonnette de fond (102), laisser le film transparent (104) au-dessous de la partie supérieure (126) du film transparent (104) libre de se déplacer par rapport à la cartonnette de fond (102), le film transparent (104) étant positionné entièrement à l'intérieur de la partie avant de la cartonnette de fond (102) et recouvrant une partie des informations imprimées sur la partie avant de la cartonnette de fond (102) ;
perforer le film transparent (104) entre la cavité (110) et la partie supérieure (126) du film transparent (104) ; et
suspendre la cartonnette de fond (102) par la partie supérieure de la cartonnette de fond (102).

15. Procédé selon la revendication 14 :
a. comprenant en outre le pliage d'une partie de tête (118) de la cartonnette de fond (102) vers l'avant et dans lequel la partie supérieure (126) du film transparent (104) est fixée entre la cartonnette de fond (102) et la partie de tête (118) de la cartonnette de fond (102) ; ou
b. dans lequel le film transparent (104) a une partie périmétrale autour du produit alimentaire (112) et entre les côtés avant et arrière (106, 108), dans lequel la partie périmétrale est transparente.
